# EUROPÄISCHE PATENTSCHRIFT

(11) **EP 3 588 130 B1**
(45) Veröffentlichungstag und Bekanntmachung des Hinweises auf die Patenterteilung: **06.11.2024**
(21) Anmeldenummer: 19166029.9
(22) Anmeldetag: 29.03.2019
(51) Int. Cl.: G01S 7/48, G01S 17/02, G01V 8/10, G06K 7/00

(54) **OPTISCHER SENSOR**
OPTICAL SENSOR
CAPTEUR OPTIQUE

(30) Priorität: 22.06.2018 DE 202018103537 U
(43) Veröffentlichungstag der Anmeldung: 01.01.2020
(73) Patentinhaber: Leuze electronic GmbH + Co. KG, 73277 Owen/Teck (DE)
(72) Erfinder: Müller, Thomas, 73119 Zell u.A. (DE); Schick, Jürgen, 73257 Köngen (DE)
(74) Vertreter: Ruckh, Rainer Gerhard

(56) Entgegenhaltungen:
- EP-A1- 1 927 867
- DE-A1- 102013 100 521
- US-A1- 2017 053 147

## Beschreibung

Die Erfindung betrifft einen optischen Sensor.

Derartige optische Sensoren weisen eine Kamera mit einer Anordnung von Empfangselementen sowie eine Auswerteeinheit zur Auswertung von Empfangssignalen der Empfangselemente der Kamera auf. Typischerweise weist der optische Sensor auch eine Beleuchtungseinrichtung auf. Die Kamera ist üblicherweise von einem CMOS- oder CCD-Array gebildet, welches eine matrixförmige Anordnung von Empfangselementen aufweist.

Mit derartigen optischen Sensoren können Objekterfassungen unterschiedlicher Art durchgeführt werden. Insbesondere können die optischen Sensoren als Codelesegeräte ausgebildet sein um Codes, insbesondere Barcodes, zu erfassen.

Ein Problem bei derartigen optischen Sensoren ist die Erfassung schnell bewegter Objekte. Tauchen die Objekte schnell in den Erfassungsbereich der Kamera des optischen Sensors ein, ist die interne Triggerung der Kamera nicht schnell genug um das Objekt noch erfassen zu können. Ein begrenzender Fehler hierbei ist insbesondere auch die relativ große Zeit, die benötigt wird um die Empfangssignale aller Empfangselemente aus der Kamera auszulesen.

Ein bekannter Ansatz zur Lösung dieses Problems besteht darin, zusätzlich zum optischen Sensor weitere Sensoren wie Lichtschranken einzusetzen, deren Signale zur Triggerung der Kamera verwendet werden. Nachteilig hierbei ist, dass derartige weitere Sensoren einen erheblichen Aufwand bedeuten.

In EP 1 927 867 A1 wird ein optoelektronischer Sensor zur Erfassung von Objekten in einem dreidimensionalen Überwachungsbereich mit mindestens einem Bildsensor, der mittels einer Vielzahl von Lichtempfangselementen ein Pixelbild des Überwachungsbereichs aufnehmen kann sowie mit mindestens einer Steuerung angegeben, die für die Erfassung eines Objekts aus Bilddaten des Pixelbilds ausgebildet ist. Dabei ist eine Mehrzahl von Bildsensoren vorgesehen, die jeweils mindestens eine Pixelzeile mit Lichtempfangselementen aufweisen und die Bildsensoren sind voneinander beabstandet angeordnet, so dass jeder Bildsensor eine eigene Ebene des Überwachungsbereichs aufnehmen kann.

Die DE 10 2013 100 521 A1 betrifft eine Sensoreinrichtung für ein Kraftfahrzeug. Die Sensoreinrichtung hat eine Lichtquelle und eine Erfassungseinrichtung, wobei die Erfassungseinrichtung mit einem Array von optischen Pixeln gebildet ist. Die Lichtquelle und die Erfassungseinrichtung sind mit einer Steuer-und Auswerteeinrichtung gekoppelt, welche die Lichtquelle zur Abgabe von Lichtpulsen ansteuert und die Erfassungseinrichtung zur Erfassung ansteuert. Die Steuer - und Auswerteeinrichtung verfügt über mehrere Ansteuerungsschemata für verschiedene Gruppen von Pixeln der Erfassungseinrichtung, wobei ein erstes Ansteuerungsschema (Ruhemodus) eine Teilmenge von Pixeln als erste Pixelgruppe ansteuert und auswertet und ein zweites Ansteuerungsschema (Aktivschema) eine größere Menge von Pixeln als zweite Pixelgruppe ansteuert und auswertet. In Abhängigkeit von dem Ergebnis der Auswertung gemäß erstem Ansteuerungsschema wechselt die Steuer- und Auswerteeinrichtung zu der Ansteuerung gemäß zweitem Ansteuerungsschema.

In US 2017/005 31 47 A1 betrifft einen Codeleser mit einem Bildsensor, der für mehrere Funktionen genutzt werden kann. Die Funktionalität des Bildsensors wird dadurch abgeleitet, dass Bereiche dieses Bildsensors definiert werden, um dort eine Filterung und für die Bereiche eine bestimmte Filterung vorzunehmen.

Der Erfindung liegt die Aufgabe zugrunde einen optischen Sensor bereitzustellen, welcher bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einer eine Anzahl von Empfangselementen aufweisenden Kamera und mit einer Auswerteeinheit, welche ausgebildet ist Empfangssignale von Empfangselementen der Kamera auszuwerten. Es sind dabei Steuermittel vorgesehen, mittels derer wenigstens ein Teilbereich der Empfangselemente auswählbar ist. Die Kamera ist derart ausgebildet, dass nur die Empfangssignale der Empfangselemente des ausgewählten Teilbereichs ausgelesen werden und dann der Auswerteeinheit zugeführt werden. In der Auswerteeinheit ist in Abhängigkeit der Empfangssignale der Empfangselemente des ausgewählten Teilbereichs ein Steuerbefehl zur Einstellung des Betriebs des optischen Sensors generierbar. Durch Auswertung der Empfangssignale der Empfangselemente des ausgewählten Teilbereichs ist ein stationäres oder ein sich bewegendes Zielobjekt erfassbar. Der optische Sensor ist ausgebildet, mehrere Zielobj ekte in Form von mehreren Reflektoren zu erfassen, die längs einer Geraden angeordnet sind, wobei jeder Reflektor mit einem passenden, ausgewählten Teilbereich detektiert wird. Die ausgewählten Teilbereiche werden selektiv und simultan aus der Kamera ausgelesen und der Auswerteeinheit zugeführt. Durch eine zeit- und ortsaufgelöste Erfassung von Objekteingriffen in den von den Reflektoren begrenzten Bereich werden Positionen, Geschwindigkeiten und Größen von Objekten erfasst, wobei abhängig hiervon Steuerbefehle zur Einstellung des Betriebs des optischen Sensors generiert werden.

Ein wesentlicher Aspekt der Erfindung besteht darin, dass mit den Steuermitteln die Kamera derart konfiguriert wird, dass ausgewählte Teilbereich der Empfangselemente von der Kamera ausgelesen werden. Mit den Steuermitteln kann dabei die Position und Größe der ausgewählten Teilbereiche frei vorgegeben werden. Damit kann gezielt mit der so konfigurierten Kamera eine Sensorfunktion realisiert werden, die insbesondere eine externe Sensorik ersetzen kann.

Da der einem ROI (region of interest) entsprechende ausgewählte Teilbereich nur einen Teil der Empfangselemente umfasst, der vorteilhaft nur einen kleinen Teil aller Empfangselemente und im Grenzfall sogar nur ein einziges Empfangeselement umfasst, kann das Auslesen der Empfangssignale der Empfangselemente des ausgewählten Teilbereichs schnell erfolgen, so dass eine entsprechend kurze Reaktionszeit für die Auswertung der Empfangssignale des ausgewählten Teilbereichs erhalten wird.

Erfindungsgemäß wird abhängig von der Auswertung der Empfangssignale der Empfangselemente von ausgewählten Teilbereichen ein Steuerbefehl zur Einstellung des Betriebs des optischen Sensors generiert. Mit der Anordnung der Empfangssignale der Empfangselemente der ausgewählten Teilbereiche wird eine interne Sensorfunktion bereitgestellt, mit der mit kurzen Reaktionszeiten der Betrieb des optischen Sensors eingestellt werden kann. Insbesondere kann damit die Bildaufnahme des optischen Sensors schnell und ohne Einsatz externer Sensoren getriggert werden.

Erfindungsgemäß sind durch Auswertung der Empfangssignale der Empfangselemente von ausgewählten Teilbereichen ein Zielobjekt erfassbar.

Die Zielobjekte und die vorzugsweise an diese angepassten ausgewählten Teilbereiche der Empfangselemente bilden somit eine Sensoranordnung, deren Sensorsignale zur Steuerung der Betriebsart des optischen Sensors verwendet werden. Da die Empfangselemente der Kamera und auch die Auswerteeinheit des optischen Sensors hierbei mitgenutzt werden können, entfallen entsprechende separate Einheiten zur Ausbildung dieser Sensorfunktion.

Die Zielobjekte sind in Form von Reflektoren wie z.B. Retroreflektoren ausgebildet. In diesem Fall bildet der optische Sensor mit den zugeordneten Reflektoren eine Reflexionslichtschranke, mit der ein Eindringen eines Objekts zwischen und optischem Sensor schnell erfasst werden kann. Die Einstellung des Betriebs erfolgt dann abhängig davon ob mit dieser Reflexionslichtschranke ein Objekt erkannt wurde oder nicht.

Gemäß einer vorteilhaften Ausgestaltung werden zur Erfassung des Zielobjekts Amplitudenbewegungen der Empfangssignale der Empfangselemente des ausgewählten Teilbereichs durchgeführt.

Ein Zielobjekt kann durch eine Schwellwertbewertung der Amplituden der Empfangssignale der Empfangselemente des ausgewählten Teilbereichs erfasst werden.

Gemäß einer vorteilhaften Ausführungsform ist eine zeitlich veränderbare Vorgabe von ausgewählten Teilbereichen vorgesehen.

Dabei erfolgt die Vorgabe von ausgewählten Teilbereichen durch eine Parametrierung.

Die Parametrierung kann durch Einlernvorgänge oder durch externe Einheiten wie Internet-Oberflächen durchgeführt werden.

Gemäß einer vorteilhaften Ausgestaltung ist durch den Steuerbefehl dessen Betriebsart einstellbar.

Wenn der optische Sensor in unterschiedlichen Betriebsarten betrieben werden kann, kann somit durch den Steuerbefehl eine bestimmte Betriebsart ausgewählt werden.

Beispielsweise kann der optische Sensor durch einen Steuerbefehl als Codelesegerät betrieben werden.

Gemäß einer weiteren vorteilhaften Ausgestaltung ist mit dem Steuerbefehl eine Bildaufnahme freigebbar.

Mit dem Steuerbefehl erfolgt somit eine Triggerung der Bildaufnahme mit dem optischen Sensor, so dass mit diesem auch schnell bewegte Objekte sicher erfasst werden können.

Dabei sind durch den Steuerbefehl unterschiedliche ausgewählte Teilbereiche oder alle Empfangselemente der Kamera für die Bildaufnahme aktiviert.

Gemäß einer weiteren vorteilhaften Ausführungsform ist dieser durch den Steuerbefehl parametrierbar.

Mit der Parametrierung können Kenngrößen des optischen Sensors zur Bildaufnahme eingestellt werden, wie die Größe des Erfassungsbereichs, Definition unterschiedlicher ROI oder Parameter für die Auswertung der Empfangssignale der Empfangselemente.

Weiterhin ist durch den Steuerbefehl die Kommunikation mit einer externen Einheit gesteuert.

Beispielsweise kann damit die Art der Ausgabesignale an eine externe Einheit vorgegeben werden. Weiterhin können unterschiedliche Schnittstellenparameter zur Ausgabe der Ausgangssignale über unterschiedliche Schnittstellen wie Leitungen, Bussysteme und dergleichen vorgegeben werden.

Schließlich ist mittels der Steuerbefehle ein mit dem optischen Sensor gekoppelter Aktuator gesteuert.

Da mehrere ausgewählte Teilbereiche vorgesehen sind, können durch Auswertung dieser Teilbereiche die Richtungen oder Geschwindigkeiten von Zielobjekten bestimmt werden, wobei in Abhängigkeit derartiger Messgrößen Aktuatoren gesteuert werden können.

Gemäß einer vorteilhaften Ausführungsform sind die Steuermittel von der Kamera zugeordneten Programm-Modulen gebildet.

Die Kamera mit dem in einer Sensorsteuerung integrierten Programm-Modul bildet dann eine kompakte Baueinheit, die ohne weitere Bestandteile zur Vorgabe bestimmter ROI genutzt werden kann.

Besonders vorteilhaft weist die Kamera eine matrixförmige Anordnung von Empfangselementen auf.

Die so ausgebildete Kamera weist eine Vielzahl von Empfangselementen auf, sodass eine hohe Bildauflösung erzielt werden kann. Dabei weist die Kamera ein CMOS- oder CCD-Array auf.

Gemäß einer zweckmäßigen Ausgestaltung der Erfindung weist der optische Sensor eine Beleuchtungseinrichtung auf.

Mit der Beleuchtungseinrichtung wird einerseits der mit dem optischen Sensor erfassbare Bereich ausgeleuchtet, wodurch die Objektdetektion verbessert wird. Wird der optische Sensor zur Distanzmessung genutzt, emittiert die Beleuchtungseinrichtung die Lichtstrahlen, deren Laufzeiten für die Distanzbestimmung von Objekten genutzt werden. Insbesondere für den Fall, dass Zielobjekte selbst Lichtquellen bilden, kann auf die Beleuchtungseinrichtung verzichtet werden.

Die Erfindung wird im Folgenden anhand der Zeichnungen erläutert. Es zeigen:
- Figur 1:: Schematische Darstellung eines Ausführungsbeispiels der erfindungsgemäßen optischen Sensoren.
- Figur 2:: Optikkomponenten des optischen Sensors gemäß Figur 1
a) in einer Draufsicht,
b) in einer Schnittdarstellung.
- Figur 3:: Draufsicht auf die lichtempfindliche Fläche einer Kamera des optischen Sensors gemäß Figur 1 mit einer matrixförmigen Anordnung von Empfangselementen und einem ausgewählten Teilbereich.
- Figur 4:: Draufsicht auf die lichtempfindliche Fläche der Kamera des optischen Sensors gemäß Figur 1 mit fünf ausgewählten Teilbereichen
a) ohne Objekteingriff,
b) bei eindringendem Objekt,
c) bei vollständig erfasstem Objekt.

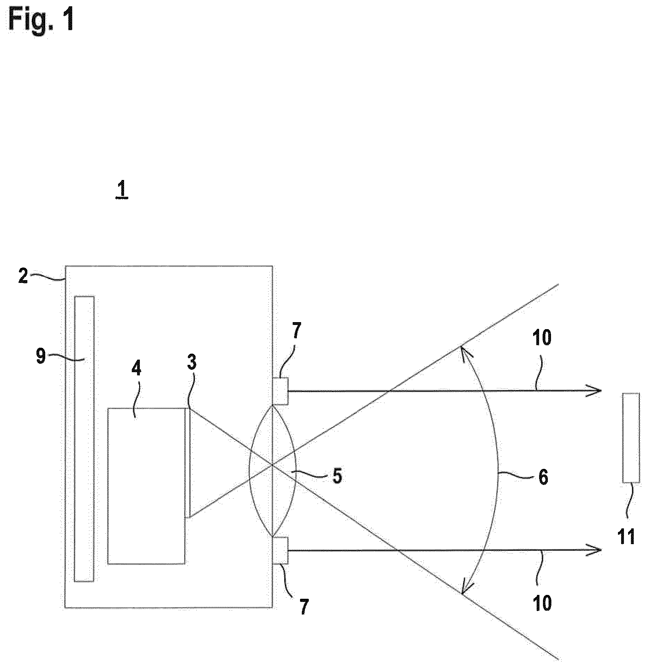

Figur 1 zeigt schematisch ein Ausführungsbeispiel des erfindungsgemäßen optischen Sensors 1. Die Komponenten des optischen Sensors sind in einem Gehäuse 2 integriert.

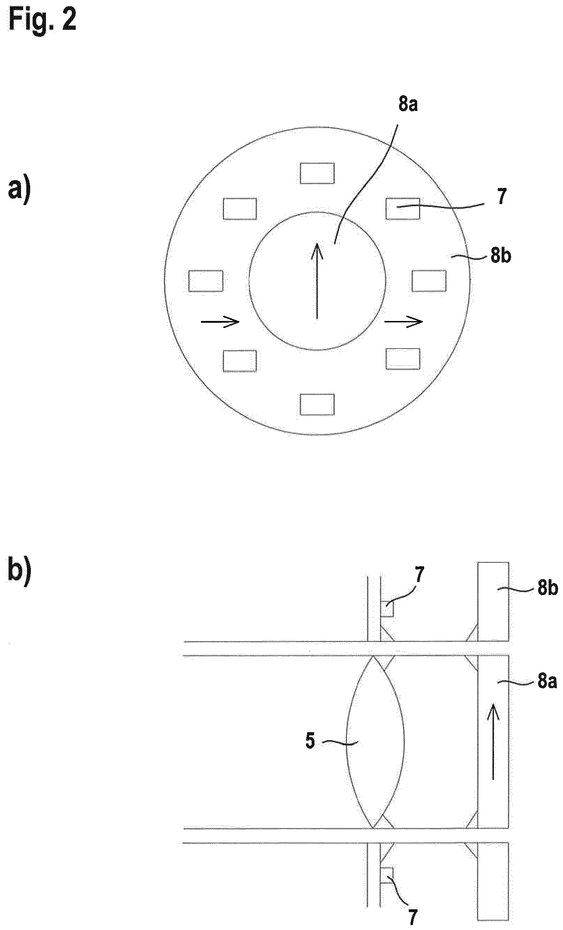

Der optische Sensor weist eine Kamera 7 auf, die von einer Sensorsteuerung 4 gesteuert wird. Der Kamera 3 ist eine Empfangsoptik 5 zugeordnet. Mit der Kamera 3 wird innerhalb eines Bildfelds 6 eine Objektdetektion ermöglicht. Weiterhin weist der optische Sensor als optionale Einrichtung eine Beleuchtungseinrichtung auf, die aus einer Anzahl von Einzellichtquellen 7 gebildet ist, die koaxial zur Kamera 3 angeordnet sind (Figuren 2a, b).

Im vorliegenden Fall sind der Empfangsoptik 5 erste Polarisationsmittel 8a vorgeordnet und den Einzellichtquellen 7 zweite Polarisationsmittel 8b nachgeordnet. Die Polarisationsrichtungen der Polarisationsmittel 8a, 8b sind senkrecht zueinander orientiert, wie mit den Pfeilen in Figur 2a veranschaulicht.

Der optische Sensor weist weiterhin eine Auswerteeinheit 9 auf, die von einem Mikroprozessor oder dergleichen gebildet sein kann. Mit der Auswerteeinheit 9 werden Empfangssignale der Kamera 3 für eine Objektdetektion ausgewertet. Weiterhin dient die Auswerteeinheit 9 zur Steuerung der Beleuchtungseinrichtung. Schließlich kann die Sensorsteuerung 4 von der Auswerteeinheit 9 gesteuert werden. Alternativ oder zusätzlich können die Sensorsignale durch Steuersignale einer nicht dargestellten externen Steuerung gesteuert werden. Dabei sind insbesondere auch cloud-basierte Systeme möglich.

Von den Einzellichtquellen 7 werden Lichtstrahlen 10 emittiert, mit denen das Bildfeld 6 der Kamera 3 ausgeleuchtet wird. Dabei sind in Figur 1 nur die Strahlachsen dieser Lichtstrahlen 10 eingezeichnet.

Wie in Figur 1 dargestellt, befindet sich im Bildfeld 6 der Kamera 3 ein Reflektor 11, der vom optischen Sensor detektiert werden kann.

Optional können die Lichtstrahlen 10 auch für eine Entfernungsmessung genutzt werden, indem die Laufzeit der Lichtstrahlen 10, vorzugsweise in Form von Lichtimpulsen, zu einem Objekt bestimmt wird. Der optische Sensor bildet dann eine Entfernungsbildkamera.

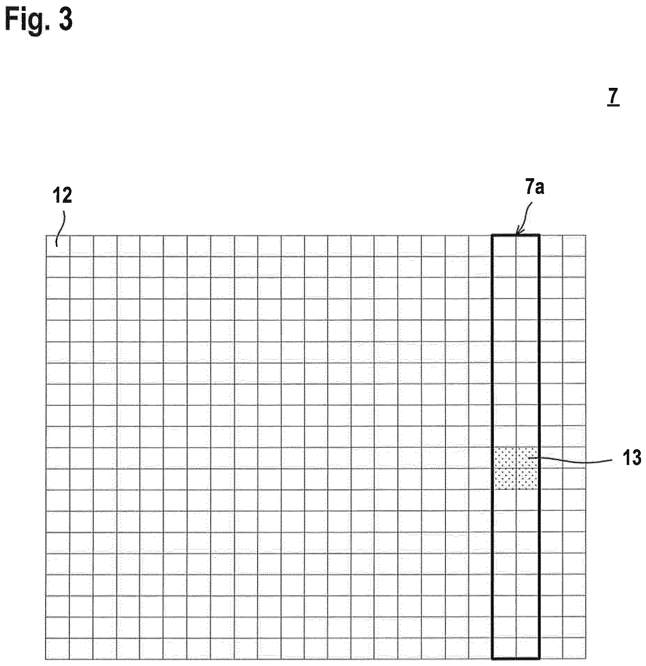

Figur 3 zeigt eine Draufsicht auf die lichtempfindliche Fläche 7a der Kamera 3, die aus einer matrixförmigen Anordnung von Empfangselementen 12 besteht. Prinzipiell ist auch eine zeilenförmige Anordnung von Empfangselementen 12 möglich. Von jedem Empfangselement 12 werden Empfangssignale generiert, die in der Auswerteeinheit 9 ausgewertet werden können. Die Kamera 3 kann von einem CCD- oder CMOS-Array gebildet sein.

Erfindungsgemäß kann durch in der Auswerteeinheit 9 generierte Steuerbefehle oder von der Steuerung eingegebenen Steuerbefehlen als Beispiel ein Programm-Modul in der Sensorsteuerung 4 angesteuert werden, das ein Steuermittel derart bildet, dass nicht alle Empfangselemente 12 der Kamera 3 ausgelesen werden, sondern nur ein oder mehrere ausgewählte Teilbereiche 13, die nur einen bevorzugt sehr kleinen Teil der Empfangselemente 12 der Kamera 3 umfassen.

Ein derartiger, im vorliegenden Fall vier Empfangselemente 12 umfassender ausgewählter Teilbereich 13 ist in Figur 3 dargestellt.

Bei einer Ausbildung der Kamera 3 als CMOS-Array können die Empfangselemente 12 exakt adressiert werden, sodass exakt nur diese Empfangselemente 12 des ausgewählten Teilbereichs 13 ausgelesen werden. Bei einer Kamera 3 in Form eines CCD-Arrays können selektiv die Spalten der Empfangselemente 12 des ausgewählten Teilbereichs 13 ausgelesen werden, wie in Figur 3 veranschaulicht. Alternativ können nur die Zeilen der Empfangselemente 12 des ausgewählten Teilbereichs 13 ausgelesen werden.

In jedem Fall können durch das Auslesen von Teilbereichen der Empfangselemente 12 die Auslesezeilen gegenüber einem kompletten Auslesen aller Empfangselemente 12 der Kamera 3 erheblich verkürzt werden. Weiterhin kann die Frequenz der Auslesevorgänge gesteigert werden.

Erfindungsgemäß wird in Abhängigkeit der Empfangssignale des ausgewählten Teilbereichs 13 der Betrieb des optischen Sensors eingestellt.

Der ausgewählte Teilbereich 13 (wie in Figur 3 veranschaulicht) wird bevorzugt so dimensioniert, dass mit diesem ein definiertes Zielobjekt erfasst wird.

Ein solches Zielobjekt ist beispielsweise der Reflektor 11 gemäß Figur 1. Alternativ kann das Zielobjekt von einer Lichtquelle gebildet sein, die zum Beispiel aus einer oder mehreren Lichtdioden besteht. Schließlich kann das Zielobjekt von einem auf einem Objekt aufgebrachten Code gebildet sein, der mit den optischen Sensoren erfassbar und dekodierbar ist.

Zur Erfassung des Zielobjekts wird mit der Auswerteeinheit 9 vorteilhaft eine Amplitudenbewertung, insbesondere eine Schwellwertbewertung, der Empfangssignale der Empfangselemente 12 des ausgewählten Teilbereichs 13 durchgeführt werden. Alternativ oder zusätzlich können Entfernungsmessungen durchgeführt werden.

Durch die Ausbildung des ausgewählten Teilbereichs 13 derart, dass in diesem der Reflektor 11 als Zielobjekt erfasst wird, kann durch eine Schwellwertbewertung der Amplituden der Empfangssignale ermittelt werden, ob ein Objekteingriff in den Bereich zwischen Reflektor 11 und optischem Sensor 1 erfolgt ist oder nicht. Wird ein Objekt erkannt, generiert die Auswerteeinheit 9 einen Steuerbefehl mit dem die Betriebsart des optischen Sensors eingestellt wird.

Beispielsweise wird damit die Bildaufnahme der Kamera 3 getriggert, sodass sie dann mit vorzugsweise allen Empfangselementen 12 das eindringende Objekt erfassen kann. Alternativ können bei der Bildaufnahme auch wieder nur einzelne ausgewählte Teilbereiche 13 der Empfangselemente 12 ausgelesen werden.

Weiterhin kann durch den Steuerbefehl die Betriebsart des optischen Sensors dargestellt werden, beispielsweise kann der optische Sensor als Codelesegerät betrieben werden.

Weiterhin kann der optische Sensor durch den Steuerbefehl parametriert werden.

Desweiteren kann durch den Steuerbefehl die Kommunikation mit einer externen Einheit gesteuert sein.

Schließlich kann mittels des Steuerbefehls ein mit dem optischen Sensor gekoppelter Aktuator gesteuert sein.

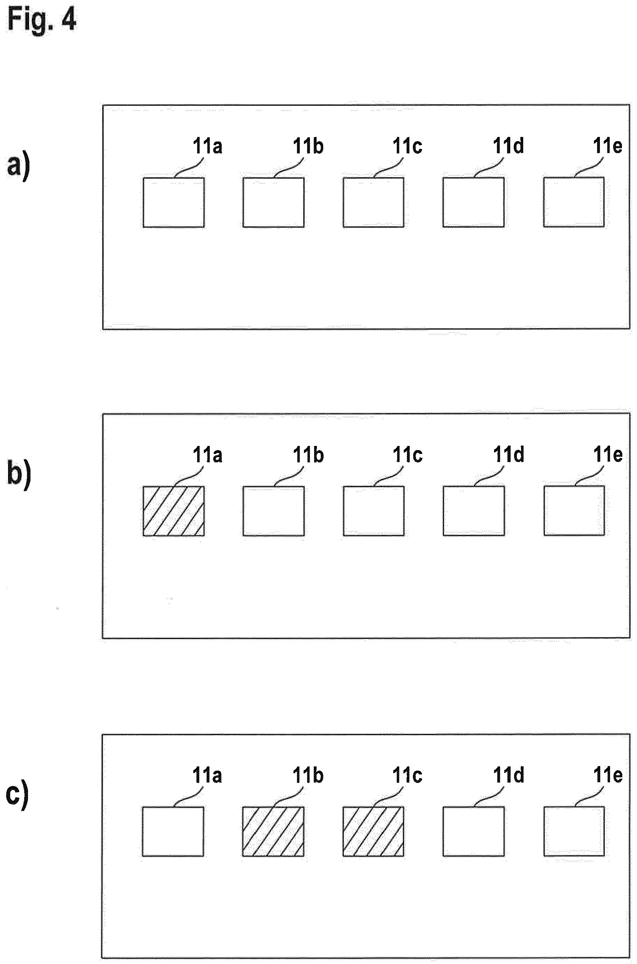

Die Figuren 4a - c zeigen eine Ausführungsform bei der mehrere Zielobjekte in Form von mehreren Reflektoren 11a - e vorgesehen sind, die längs einer Geraden angeordnet sind. Diese Anordnung kann beispielsweise dadurch gebildet werden, dass auf eine Reflektorleiste eine Schablone mit fünf Löchern aufgesetzt wird.

Für jeden Reflektor 11a - e wird auf der lichtempfindlichen Fläche 7a der Kamera 3 ein passender ausgewählter Teilbereich 13 detektiert. Die fünf ausgewählten Teilbereiche 13 werden selektiv und simultan aus der Kamera 3 ausgelesen und der Auswerteeinheit 9 zugeführt.

Figur 4a zeigt die Situation wenn sich kein Objekt zwischen den Reflektoren 11a - e und dem optischen Sensor befindet. Dann werden alle Reflektoren 11a - e vom optischen Sensor erkannt.

Figur 4b zeigt die Situation, wenn ein Objekt in den von den Reflektoren 11a-e begrenzten Bereich eindringt. Demzufolge ist durch das Objekt der Lichtweg zum Reflektor 11a unterbrochen, nicht jedoch zu den übrigen Reflektoren 11b - e.

Figur 4c zeigt die Situation, wenn das Objekt vollständig in den von den Reflektoren 11a-e begrenzten Bereich eingedrungen ist. Demzufolge sind durch das Objekt die Lichtwege zu den Reflektoren 11b, 11c unterbrochen, nicht jedoch zu den übrigen Reflektoren 11a, 11d, 11e.

Durch die zeit- und ortsaufgelöste Erfassung von Objekteingriffen mit den Reflektoren 11a - 11e können somit die Positionen, Geschwindigkeiten und Größen von Objekten erfasst werden. Abhängig können Steuerbefehle zur Einstellung des Betriebs des optischen Sensors generiert werden.

### Bezugszeichenliste

- (1): Optischer Sensor
- (2): Gehäuse
- (3): Kamera
- (4): Sensorsteuerung
- (5): Empfangsoptik
- (6): Bildfeld
- (7): Einzellichtquelle
- (7a): Fläche
- (8a): Polarisationsmittel
- (8b): Polarisationsmittel
- (9): Auswerteeinheit
- (10): Lichtstrahl
- (11): Reflektor
- (11a-e): Reflektor
- (12): Empfangselement
- (13): ausgewählter Teilbereich

## Patentansprüche

1. Optischer Sensor (1) mit einer eine Anzahl von Empfangselementen (12) aufweisenden Kamera (3) und mit einer Auswerteeinheit (9), welche ausgebildet ist, Empfangssignale von Empfangselementen (12) der Kamera (3) auszuwerten, wobei Steuermittel vorgesehen sind, mittels derer wenigstens ein Teilbereich (13) der Empfangselemente (12) auswählbar ist, wobei die Kamera (3) derart ausgebildet ist, dass nur die Empfangssignale der Empfangselemente (12) des ausgewählten Teilbereichs (13) ausgelesen werden und dann der Auswerteeinheit (9) zugeführt werden und dass in der Auswerteeinheit (9) in Abhängigkeit der Empfangssignale der Empfangselemente (12) des ausgewählten Teilbereichs (13) ein Steuerbefehl zur Einstellung des Betriebs des optischen Sensors (1) generierbar ist, und wobei durch Auswertung der Empfangssignale der Empfangselemente (12) des ausgewählten Teilbereichs (13) ein stationäres oder ein sich bewegendes Zielobjekt erfassbar ist, **dadurch gekennzeichnet, dass** der optische Sensor ausgebildet ist, mehrere Zielobjekte in Form von mehreren Reflektoren (11a-e), die längs einer Geraden angeordnet sind, zu erfassen, wobei jeder Reflektor (11a-e) mit einem passenden, ausgewählten Teilbereich (13) detektiert wird, wobei die ausgewählten Teilbereiche (13) selektiv und simultan aus der Kamera (3) ausgelesen und der Auswerteeinheit (9) zugeführt werden, dass durch eine zeit- und ortsaufgelöste Erfassung von Objekteingriffen in den von den Reflektoren (1 1a-e) begrenzten Bereich Positionen, Geschwindigkeiten und Größen von Objekten erfasst werden, wobei abhängig hiervon Steuerbefehle zur Einstellung des Betriebs des optischen Sensors (1) generiert werden.

2. Optischer Sensor (1) nach Anspruch 1, **dadurch gekennzeichnet, dass** zur Erfassung der Zielobjekte Amplitudenbewertungen der Empfangssignale der Empfangselemente (12) des ausgewählten Teilbereichs (13) durchgeführt werden.

3. Optischer Sensor (1) nach einem der Ansprüche 1 oder 2, **dadurch gekennzeichnet, dass** eine zeitlich veränderbare Vorgabe von ausgewählten Teilbereichen (13) vorgesehen ist.

4. Optischer Sensor (1) nach Anspruch 3, **dadurch gekennzeichnet, dass** die Vorgabe von ausgewählten Teilbereichen (13) durch eine Parametrierung erfolgt.

5. Optischer Sensor (1) nach einem der Ansprüche 1 bis 4, **dadurch gekennzeichnet, dass** durch den Steuerbefehl dessen Betriebsart einstellbar ist und/oder, dass dieser durch den Steuerbefehl parametrierbar ist, und/oder dass durch den Steuerbefehl die Kommunikation mit einer externen Einheit gesteuert ist, und/oder dass mittels des Steuerbefehls ein mit dem optischen Sensor (1) gekoppelter Aktuator gesteuert ist.

6. Optischer Sensor (1) nach Anspruch 5, **dadurch gekennzeichnet, dass** dieser durch den Steuerbefehl als Codelesegerät betrieben ist.

7. Optischer Sensor (1) nach einem der Ansprüche 1 bis 6, **dadurch gekennzeichnet, dass** mit dem Steuerbefehl eine Bildaufnahme freigebbar ist.

8. Optischer Sensor (1) nach Anspruch 1 bis 7, **dadurch gekennzeichnet, dass** die Steuermittel von der Kamera (3) zugeordneten Programm-Modulen gebildet sind.

9. Optischer Sensor (1) nach einem der Ansprüche 1 bis 8, **dadurch gekennzeichnet, dass** die Kamera (3) eine matrixförmige Anordnung von Empfangselementen (12) aufweist.

10. Optischer Sensor (1) nach einem der Ansprüche 1 bis 9, **dadurch gekennzeichnet, dass** die Kamera (3) ein CMOS- oder CCD-Array aufweist, und/oder dass dieser eine Beleuchtungseinrichtung aufweist.

## Claims

1. An optical sensor (1) with a camera (3) having a number of receiving elements (12) and with an evaluation unit (9) which is designed to evaluate received signals from receiving elements (12) of the camera (3), wherein control means are provided by means of which at least one partial area (13) of the receiving elements (12) can be selected, wherein the camera (3) is designed in such a way that only the received signals of the receiving elements (12) of the selected partial area (13) are read out and then fed to the evaluation unit (9) and that a control command for setting the operation of the optical sensor (1) can be generated in the evaluation unit (9) as a function of the received signals of the receiving elements (12) of the selected partial area (13), and wherein a stationary or a moving target object can be detected by evaluating the received signals of the receiving elements (12) of the selected sub-region (13), **characterised in that** the optical sensor is designed to detect a plurality of target objects in the form of a plurality of reflectors (1 1a-e) which are arranged along a straight line, wherein each reflector (11a-e) is detected with a matching, selected sub-region (13), wherein the selected partial areas (13) are selectively and simultaneously read out from the camera (3) and fed to the evaluation unit (9), that positions, speeds and sizes of objects are detected by a time- and location-resolved detection of object interventions in the area delimited by the reflectors (11a-e), wherein control commands for adjusting the operation of the optical sensor (1) are generated as a function thereof.

2. An optical sensor (1) according to claim 1, **characterised in that** amplitude evaluations of the received signals of the receiving elements (12) of the selected partial area (13) are carried out to detect the target objects.

3. An optical sensor (1) according to one of claims 1 or 2, **characterised in that** a timevariable presetting of selected partial areas (13) is provided.

4. An optical sensor (1) according to claim 3, **characterised in that** the specification of selected partial areas (13) is carried out by parameterisation.

5. An optical sensor (1) according to one of claims 1 to 4, **characterised in that** its operating mode can be set by the control command and/or **in that** it can be parameterised by the control command and/or **in that** communication with an external unit is controlled by the control command and/or **in that** an actuator coupled to the optical sensor (1) is controlled by means of the control command.

6. An optical sensor (1) according to claim 5, **characterised in that** it is operated as a code reader by the control command.

7. An optical sensor (1) according to one of claims 1 to 6, **characterised in that** an image recording can be enabled with the control command.

8. An optical sensor (1) according to claim 1 to 7, **characterised in that** the control means are formed by program modules assigned to the camera (3).

9. An optical sensor (1) according to one of claims 1 to 8, **characterised in that** the camera (3) has a matrix-shaped arrangement of receiving elements (12).

10. An optical sensor (1) according to one of claims 1 to 9, **characterised in that** the camera (3) has a CMOS or CCD array, and/or **in that** it has a illumination device.

## Revendications

1. Capteur optique (1) muni d'une caméra (3) comportant un certain nombre d'éléments récepteurs (12) et d'une unité d'évaluation (9) conçue pour évaluer les signaux reçus des éléments récepteurs (12) de la caméra (3), dans lequel des moyens de commande sont prévus pour sélectionner au moins une zone partielle (13) des éléments récepteurs (12), la caméra (3) est conçue de manière à ce que seuls les signaux reçus des éléments récepteurs (12) de la zone partielle sélectionnée (13) soient lus puis transmis à l'unité d'évaluation (9) et qu'une commande de réglage du fonctionnement du capteur optique (1) puisse être générée dans l'unité d'évaluation (9) en fonction des signaux reçus des éléments récepteurs (12) de la zone partielle sélectionnée (13), et dans lequel un objet cible stationnaire ou mobile peut être détecté en évaluant les signaux reçus des éléments récepteurs (12) de la sous-région sélectionnée (13), **caractérisé en ce que** le capteur optique est conçu pour détecter une pluralité d'objets cibles sous la forme d'une pluralité de réflecteurs (11a-e) qui sont disposés le long d'une ligne droite, dans lequel chaque réflecteur (11a-e) est détecté avec une sous-région sélectionnée correspondante (13), les zones partielles sélectionnées (13) sont lues sélectivement et simultanément par la caméra (3) et transmises à l'unité d'évaluation (9), les positions, vitesses et tailles des objets sont détectées par une détection résolue dans le temps et l'espace des interventions de l'objet dans la zone délimitée par les réflecteurs (11a-e), des instructions de commande pour ajuster le fonctionnement du capteur optique (1) sont générées en fonction de cela.

2. Capteur optique (1) selon la revendication 1, **caractérisé par** l'évaluation de l'amplitude des signaux reçus des éléments récepteurs (12) de la zone partielle sélectionnée (13) pour détecter les objets cibles.

3. Capteur optique (1) selon l'une des revendications 1 ou 2, **caractérisé par** un préréglage variable dans le temps des zones partielles sélectionnées (13).

4. Capteur optique (1) selon la revendication 3, **caractérisé par le fait que** la spécification des zones partielles sélectionnées (13) est effectuée par paramétrage.

5. Capteur optique (1) selon l'une des revendications 1 à 4, **caractérisé en ce que** son mode de fonctionnement peut être défini par l'instruction de commande et/ou **en ce qu'**il peut être paramétré par l'instruction de commande et/ou **en ce que** la communication avec une unité externe est commandée par l'instruction de commande et/ou **en ce qu'**un actionneur couplé au capteur optique (1) est commandé au moyen de l'instruction de commande.

6. Capteur optique (1) selon la revendication 5, **caractérisé par le fait qu'**il est utilisé comme lecteur de code par l'instruction de commande.

7. Capteur optique r (1) selon l'une des revendications 1 à 6, **caractérisé par le fait qu'**un enregistrement d'image peut être activé avec l'instruction de commande.

8. Capteur optique (1) selon les revendications 1 à 7, **caractérisé par le fait que** les moyens de commande sont constitués par des modules de programme affectés à la caméra (3).

9. Capteur optique (1) selon l'une des revendications 1 à 8, **caractérisé par le fait que** la caméra (3) présente une disposition matricielle des éléments récepteurs (12).

10. Capteur optique (1) selon l'une des revendications 1 à 9, **caractérisé par le fait que** la caméra (3) possède une matrice CMOS ou CCD, et/ou **par le fait qu'**elle possède un dispositif d'éclairage.
